# FASCICULE DE BREVET EUROPEEN

(11) **EP 0 992 790 B1**
(45) Date de publication et mention de la délivrance du brevet: **23.07.2008**
(21) Numéro de dépôt: 98119146.3
(22) Date de dépôt: 09.10.1998
(51) Int. Cl.: G01N 27/30

(54) **Capteur électrochimique en forme de languette facile à manipuler**
Einfach handzuhabender streifenförmiger elektrochemischer Sensor
Easy to manipulate strip shaped electrochemical sensor

(43) Date de publication de la demande: 12.04.2000
(73) Titulaire: ASULAB S.A., 2074 Marin (CH)
(72) Inventeur: Frenkel, Erik Jan, 2000 Neuchatel (CH); Jaeger, Gérard, 1807 Blonay (CH)
(74) Mandataire: Thérond, Gérard Raymond

(56) Documents cités:
- EP-A- 0 645 627
- EP-A- 0 787 984
- WO-A-87/00286

## Description

La présente invention a pour objet un capteur électrochimique en forme de languette facile à manipuler, par exemple pour le saisir sur une surface plane et l'introduire dans un appareil électronique permettant de déterminer des paramètres biologiques ou de mesurer la concentration d'un composant en solution.

Des bandes à réactifs faisant appel à une réaction chimique modifiant une couleur, désignées par le terme général de "capteurs chimiques" ou de "capteurs colorimétriques", sont d'un usage courant pour un grand nombre de déterminations ou de dosages chimiques ou biologiques et ne présentent pas de difficultés de manipulation particulières lorsque ces capteurs sont sous forme d'un rouleau dont on détache une partie pour en plonger une extrémité dans la solution à analyser. De tels capteurs sont facile à manipuler car on les garde généralement à la main jusqu'à ce que la réaction colorée se soit développée, et puis on les jette. Lorsque ces capteurs sont conditionnés dans des pochettes individuelles, l'utilisateur peut avoir des difficultés à ouvrir la pochette. Lorsqu'ils ne sont pas conditionnés individuellement, et qu'ils sont, soit empilés dans une boîte, soit placés en vrac dans un tube, il est souvent difficile d'en extraire un seul du conditionnement, notamment en raison des possibilités de collage des capteurs entre eux.

Toutefois, pour rendre cette manipulation plus facile dans le cas où le capteur serait malgré tout déposé sur une surface plane, le document US 5,008,077 propose un capteur chimique plus facile à saisir par basculement. Ce capteur se compose d'un support plastique allongé, dont une extrémité supporte le matériau réactif et dont l'autre extrémité, par laquelle il doit être saisi, est éloignée de la surface plane sur laquelle il repose, soit en recourbant, par exemple par pliage, ladite extrémité, soit en déformant le matériau plastique entre ladite extrémité à saisir et le matériau réactif pour former sur une grande partie de sa largeur un bossage orienté vers la surface plane, c'est-à-dire un bossage situé sur la face du capteur opposée à celle qui supporte le matériau réactif.

L'agencement ci-dessus n'est pas satisfaisant pour un capteur électrochimique en ce qu'il comporte au moins deux collecteurs de courant reliant une zone de contact disposée à une extrémité et au moins une zone de mesure située à une certaine distance sur le capteur. Ces collecteurs occupent une très grande partie de la largeur du support plastique et sont formés par des matériaux conducteurs excessivement minces, disposés sur ledit support par laminage d'un film plastique métallisé ou par sérigraphie d'une pâte conductrice. De tels collecteurs, dont l'épaisseur de l'ordre de quelques dizaines de microns seraient détériorés par toute opération de pliage ou d'estampage de la surface de support plastique sur une trop grande partie de sa largeur.

L'invention vise à remédier aux inconvénients de l'art antérieur susmentionné en fournissant un capteur électrochimique facile à saisir sur une surface plane en ayant la possibilité de le faire glisser jusqu'au bord de ladite surface. L'invention a également pour objet un tel capteur dont l'introduction dans un appareil électronique ne soit possible que dans un seul sens, et qui permette à une personne malvoyante de discerner quelle face du capteur supporte la zone de mesure et la zone de contact et de repérer facilement leur emplacement sans les toucher. Selon un autre aspect, les capteurs électrochimique selon l'invention peuvent être conditionnés en les empilant dans une boîte sans qu'il y ait de risque de collage de deux capteurs entre eux.

A cet effet, l'invention a pour objet un capteur électrochimique, du type de celui décrit dans le document EP 0 787 984 pour la détermination de paramètres biologiques, ou pour la mesure de la concentration d'un composant en solution, en forme d'une languette de petites dimensions comprenant un substrat plastique mince supportant, sur tout ou partie de sa longueur, au moins deux collecteurs de courant séparés par un espace électriquement isolant. Le substrat et les collecteurs sont recouverts d'un revêtement plastique, dans lequel sont découpées deux fenêtres laissant apparaître des portions de collecteurs pour former une fenêtre de connexion à une extrémité et une fenêtre de mesure près de l'autre extrémité, en laissant libre une portion distale de la languette au delà de la fenêtre de mesure. Ce capteur est partiellement caractérisé par le fait que ladite portion distale comprend, du côté de la languette où sont disposées les fenêtres, au moins un bouton obtenu par une déformation à chaud ou à froid de la face externe du substrat.

Pour un capteur électrochimique et notamment un capteur destiné à mesurer un paramètre biologique, tel que le taux de glucose dans le sang, il est nécessaire, après l'avoir sorti de son conditionnement sur une surface plane, de pouvoir le saisir délicatement pour l'introduire dans un appareil de mesure, et ensuite déposer une goutte de la solution d'essai, telle qu'une goutte de sang.

Le capteur selon l'invention permet d'atteindre ce but en pouvant, grâce au bouton en relief sur la surface du capteur comprenant la zone contact et la zone de mesure, le faire glisser jusqu'au bord de la surface plane, par exemple jusqu'au bord d'une table. Selon l'invention, cette déformation est effectuée de telle sorte que la hauteur du bouton par rapport à la surface externe du revêtement soit plus grande que la profondeur de l'enveloppe de la déformation effectuée dans le substrat avec un poinçon permettant de repousser une petite quantité de matière plastique pour former le bouton. Dans les exemples détaillés ci-après plusieurs modes d'exécution seront donnés à titre d'exemples. Comme on le comprend, si on veut fabriquer de tels capteurs en lots de la façon la plus économique, ils auront tous le bouton et la déformation correspondante au même endroit. S'ils étaient conditionnés par empilement, il y aurait un risque qu'ils s'assemblent à la façon de boutons-pression si la forme de la déformation était exactement la même que celle du bouton. L'invention permet d'éviter cet inconvénient en ménageant toujours, sur au moins une partie de leur longueur, un espace entre deux capteurs empilés qui auraient des boutons et des déformations exactement en coïncidence.

Lorsque les capteurs sont fabriqués avec des collecteurs allant d'un bout à l'autre du support, le bouton de préhension est de préférence disposé au niveau de l'espace isolant. A titre complémentaire il est possible de positionner aléatoirement le bouton sur toute la longueur de l'espace isolant se trouvant dans la partie distale.

Il est également possible de fabriquer des capteurs en lots en ne mettant pas, ou en éliminant, les collecteurs dans la partie distale. Il est alors possible de disposer de façon aléatoire le bouton de préhension sur toute la surface de ladite partie distale. Il est même possible de disposer plusieurs boutons pouvant éventuellement former ensemble une barrette de préhension sur tout ou partie de la largeur du capteur.

D'autres caractéristiques et avantages de l'invention apparaîtront mieux à la lecture de la description détaillée qui suit, en référence aux dessins annexés dans lesquels :
- la figure 1 est une représentation en perspective d'un capteur électrochimique selon l'invention.
- la figure 2A est une représentation en coupe agrandie selon la ligne II-II de la figure 1 d'un premier mode de réalisation du bouton de préhension.
- la figure 2B est une représentation en coupe agrandie selon la ligne II-II de la figure 1 d'un deuxième mode de réalisation du bouton de préhension.
- la figure 3 est une vue de dessous de la déformation formant le bouton représenté à la figure 2B.
- la figure 4 est la représentation en perspective d'un autre mode de réalisation d'un capteur selon l'invention.

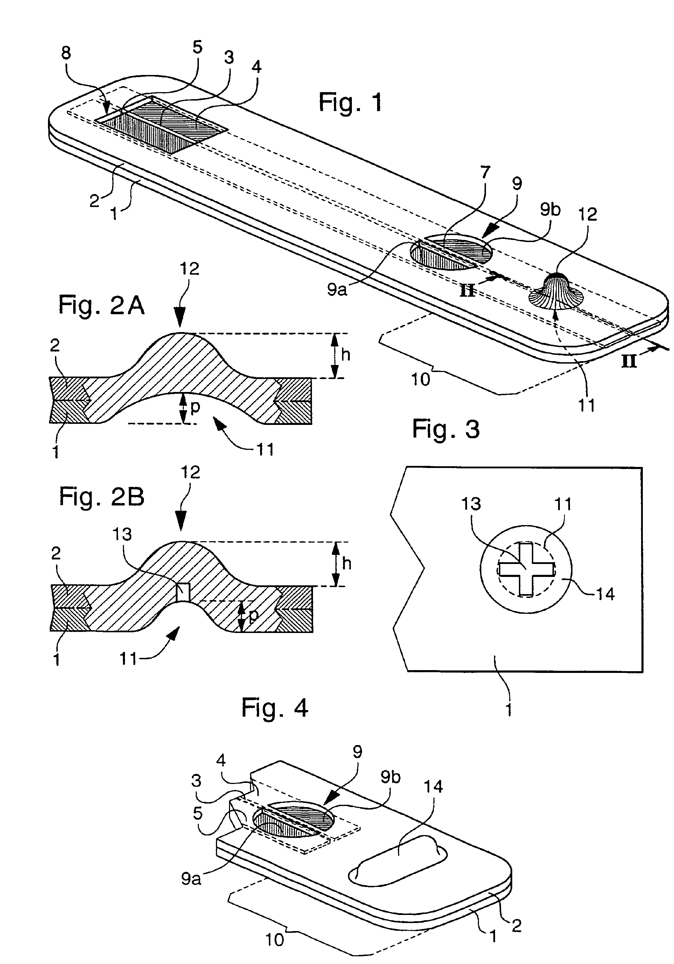

En se référant à la figure 1 on a représenté à titre d'exemple un capteur électrochimique permettant de déterminer par ampérométrie le taux de glucose dans le sang. Le capteur comprend un substrat plastique mince 1, réalisé par exemple en PET, supportant sur toute sa longueur deux collecteurs de courant 4, 5 séparés par un petit espace 3 qui isole électriquement les deux collecteurs 4, 5. La nature de ces collecteurs 4, 5 et la façon de les appliquer sur le substrat sont bien connues de l'homme de l'art, le procédé consistant par exemple à laminer deux films isolants métallisés, en utilisant des métaux différents pour le collecteur 5 qui formera l'électrode de travail 9a et le collecteur 4 qui formera l'électrode de référence 9b. On utilisera par exemple le couple bien connu Pt-Ag/AgCl. Le substrat 1 et les collecteurs/électrodes 4, 5/9a, 9b sont recouvert d'un revêtement isolant 2 dans lequel sont découpées, par exemple par estampage, deux fenêtres 8, 9 laissant apparaître des portions de collecteur 4, 5. Une première fenêtre 8 est située à une extrémité du capteur et permet de le connecter électriquement à un appareil de mesure en l'introduisant dans une ouverture prévue à cet effet. Une deuxième fenêtre 9 disposée près de l'autre extrémité délimite une fenêtre de mesure laissant apparaître les électrodes 9a, 9b. Dans l'exemple choisi, on appliquera sur l'électrode de mesure 9a une composition réactive comprenant par exemple une glucose oxydase (GOD) et un médiateur permettant de transférer les électrons, par exemple selon l'enseignement du brevet US 5,378,628. Le capteur, ou plus précisément le substrat 1 et le revêtement 2, est prolongé au-delà de la fenêtre de mesure 9 par une partie distale 10 qui permet de saisir le capteur, sans toucher ni la fenêtre de connexion 8, ni la fenêtre de mesure 9, pour l'introduire dans l'appareil de mesure. Pour permettre ou faciliter la préhension du capteur cette partie distale 10 est pourvue d'un bouton 12, obtenu par une déformation 11 du substrat 1 et du revêtement 2, qui permet par application d'un doigt de le faire facilement glisser jusqu'au bord d'une surface plane.

Ce bouton 12 peut être obtenu de différentes façons, mais selon un autre aspect de l'invention en se référant aux figures 2A et 2B il est réalisé par une déformation 11 à chaud ou à froid de la face externe du substrat, telle que la hauteur h dudit bouton 12 soit supérieure à la profondeur p de la déformation 11. Comme représenté à la figure 2A, dans laquelle le substrat 1 et le revêtement 2 sont représentés fusionnés par l'assemblage du capteur, ce résultat est obtenu en effectuant la déformation au moyen d'un poinçon dont l'extrémité arrondie présente un rayon de courbure plus grand que celui d'une matrice placée du côté du revêtement et correspondant en creux à la forme souhaitée pour le bouton. Selon un autre mode de réalisation représenté à la figure 2B, le poinçon utilisé peut avoir sensiblement le même rayon de courbure que celui souhaité pour le bouton 12, mais présente à son extrémité une extension axiale ménageant à la périphérie une couronne d'appui 14. Cette extension axiale est par exemple en forme de croix comme représenté à la figure 3. On peut également lui donner toute autre forme, tel qu'un signe alphanumérique lisible sous le capteur et par exemple représentatif d'une caractéristique dudit capteur. Cette extension axiale du poinçon produit un enfoncement 13 du fond de l'enveloppe de la déformation 11, en déplaçant de la matière plastique supplémentaire pour conférer au bouton 12 une hauteur h supérieure à la profondeur p de la déformation 11. L'enveloppe de la déformation 11 sera alors plus petite que celle du bouton 12.

Les représentations en coupe 2A, 2B concernent un capteur dans lequel les collecteurs de courant 4, 5 sont disposés sur toute la longueur du substrat 1, essentiellement en raison d'impératifs économiques de fabrication en série. Les portions de collecteur situés dans la partie distale 10 n'ont aucune fonction technique, mais risquent de mettre le capteur en court-circuit si la déformation provoque un déplacement desdits collecteurs. Pour cette raison, le bouton 12 est positionné de préférence au niveau de l'espace isolant 3, et peut selon le choix du fabricant occuper une place aléatoire le long de cette ligne, y compris pour des capteurs provenant d'un même lot de fabrication.

En se référant maintenant à la figure 4, on a représenté la partie distale 10 d'un capteur dans laquelle les collecteurs de courant 4, 5 ont été interrompus, par exemple par abrasion desdits collecteurs 4, 5 dans cette partie. Les risques de court-circuit évoqués précédemment n'existent plus, et un ou plusieurs boutons peuvent occuper une place aléatoire sur ladite partie distale 10. Comme représenté, il est même possible que plusieurs boutons 12 forment ensemble une barrette 14, ladite barrette 14 étant alors obtenue avec un poinçon ayant la forme appropriée.

Les exemples précédents, donnés à titre illustratif et non limitatif, montrent qu'il est possible, sans pour autant augmenter sensiblement le coût de fabrication, de fabriquer des capteurs électrochimiques plus facile à manipuler, plus facile à conditionner et dont le bouton a également une fonction de "détrompeur", étant donné que la fente de l'appareil de mesure dans laquelle il doit être introduit correspond toujours exactement à la section droite du capteur.

La description précédente a été faite essentiellement en référence à un capteur électrochimique pour la mesure du taux de glucose, mais l'homme de métier peut, sans sortir du cadre de l'invention faire les adaptations nécessaires pour tout autre type de capteur électrochimique faisant appel à des mesures conductrimétriques, voltamétriques, coulométriques ou polarographiques, pour déterminer ou mesurer d'autres paramètres chimiques ou biologiques.

## Revendications

1. Capteur électrochimique facile à manipuler pour la détermination de paramètres biologiques, ou pour la mesure de la concentration d'un composant en solution, en forme d'une languette de petites dimensions comprenant un substrat (1) plastique mince supportant, sur tout ou partie de sa longueur, au moins deux collecteurs (4, 5) de courant séparés par un espace (3) électriquement isolant, ledit substrat (1) et lesdits collecteurs (4, 5) étant recouverts d'un revêtement (2) plastique, dans lequel sont découpées deux fenêtres (8, 9) laissant apparaître des portions de collecteurs (4, 5) pour former une fenêtre de connexion (8) à une extrémité et une fenêtre de mesure (9) près de l'autre extrémité, en laissant libre une portion distale (10) de la languette au delà de la fenêtre de mesure (9), **caractérisé en ce que** ladite portion distale (10) comprend, du côté de la languette où sont disposés les collecteurs (4, 5) et les fenêtres (8, 9), au moins un bouton (12) obtenu par une déformation (11) à chaud ou à froid de la face externe du substrat (1), permettant ainsi de faire glisser ledit capteur jusqu'au bord d'une surface plane pour le saisir, la hauteur h dudit au moins un bouton (12) au-dessus du revêtement (2) étant supérieure à la profondeur p de l'enveloppe de la déformation (11) du substrat (1), permettant d'éviter le collage de capteurs entre eux lorsqu'ils sont empilés dans un conditionnement.

2. Capteur électrochimique selon la revendication 1, **caractérisé en ce que** la différence entre les valeurs h et p est obtenue par un enfoncement du fond de l'enveloppe de la déformation (11), le bouton (12) et la déformation (11) pouvant alors avoir sensiblement le même rayon de courbure.

3. Capteur électrochimique selon la revendication 2, **caractérisé en ce que** ledit enfoncement est réalisé au moyen d'un poinçon dont l'extension axiale permet de former dans la profondeur p de l'enveloppe une référence représentative du capteur.

4. Capteur électrochimique selon la revendication 1, **caractérisé en ce que** la différence entre les valeurs h et p est obtenue en ayant un rayon de courbure de la déformation (11) plus grand que celui d'un bouton (12).

5. Capteur électrochimique selon l'une quelconque des revendications 1 à 4, **caractérisé en ce que** les collecteurs sont disposés sur toute la longueur du capteur et **en ce qu'**un bouton (12) est disposé du niveau de l'espace isolant (3).

6. Capteur électrochimique selon l'une quelconque des revendications 1 à 5, **caractérisé en ce que** plusieurs boutons (12) forment ensemble une barrette (14).

## Claims

1. Electrochemical sensor easy to handle for determining biological parameters, or measuring the concentration of a constituent in solution, in the shape of a strip of small dimensions including a thin plastic substrate (1) carrying, over all or part of its length, at least two current collectors (4, 5) separated by an electrically insulating space (3), said substrate (1) and said collectors (4, 5) being covered with a plastic coating (2), in which two windows (8, 9) are cut allowing collector portions (4, 5) to appear to form a connection window (8) at one end and a measuring window (9) close to the other end, leaving a distal portion (10) of the strip free beyond the measuring window (9), **characterized in that** said distal portion (10) includes, on the side of the strip where the collectors (4, 5) and the windows (8, 9) are arranged, at least one button (12) obtained by hot or cold deformation (11) of the external face of the substrate (1), allowing thus To slide said sensor until the edge of a plane surface in order to take it, the height h of at least one button (12) above the coating (2) being greater than the depth p of the envelope of the deformation (11) of the substrate (1), avoiding the bonding of the sensors when latters are stacked in a packaging.

2. Electrochemical sensor according to claim 1, **characterized in that** the difference between the values h and p is obtained by an indentation of the bottom of the envelope of the deformation (11), the button (12) and the deformation (11) being then able to have substantially the same radius of curvature.

3. Electrochemical sensor according to claim 2, **characterized in that** said indentation is generated with help of a punch which axial extension allows to shape a sign corresponding to the sensor in the depth p of the envelope.

4. Electrochemical sensor according to claim 1, **characterized in that** the difference between the values h and p is obtained by having a greater radius of curvature for the deformation (11) than that of a button (12).

5. Electrochemical sensor according to any one of claims 1 to 4, **characterized in that** the collectors are arranged over the entire length of the sensor and **in that** a button (12) is arranged in the region of the insulating space (3).

6. Electrochemical sensor according to any one of claims 1 to 5, **characterized in that** several buttons (12) together form a bar (14).

## Patentansprüche

1. Leicht zu handhabender elektrochemischer Sensor zum Bestimmen biologischer Parameter oder zur Messung der Konzentration eines Bestandteils in Lösung in Form einer Zunge mit kleinen Abmessungen, welche ein dünnes Kunststoffsubstrat (1) umfasst, das auf seiner gesamten Länge oder einem Teil davon wenigstens zwei Stromkollektoren (4, 5) trägt, die von einem elektrisch isolierenden Bereich (3) voneinander getrennt sind, wobei das Substrat (1) und die Kollektoren (4, 5) von einer Kunststoffbeschichtung (2) bedeckt sind, in der zwei Fenster (8, 9) ausgeschnitten sind, welche Bereiche der Kollektoren (4, 5) zum Vorschein kommen lassen, um ein Anschlussfenster (8) an einem Ende und ein Messfenster (9) in der Nähe des anderen Endes zu bilden, wobei sie einen distalen Bereich (10) der Zunge jenseits des Messfensters (9) frei lassen, **dadurch gekennzeichnet, dass** der distale Bereich (10) auf der Seite der Zunge, an der die Kollektoren (4, 5) und die Fenster (8, 9) angeordnet sind, wenigstens eine knopfartige Erhebung (12) umfasst, die durch eine Heiss- oder Kaltverformung (11) der äusseren Seite des Substrates (1) erhalten worden ist, welche es somit erlaubt, den Sensor bis zum Rand einer ebenen Oberfläche gleiten zu lassen, um ihn zu erfassen, wobei die Höhe h der wenigstens einen knopfartigen Erhebung (12) über der Beschichtung (2) grösser ist als die Tiefe p der Kontur der Verformung (11) des Substrates (1), wodurch ein Zusammenkleben von Sensoren untereinander vermieden wird, wenn diese in einer Verpackung gestapelt sind.

2. Elektrochemischer Sensor nach Anspruch 1, **dadurch gekennzeichnet, dass** der Unterschied zwischen den Werten h und p durch ein Eindrücken des Bodens der Kontur der Verformung (11) erhalten ist, sodass die knopfartige Erhebung (12) und die Verformung (11) also im Wesentlichen den gleichen Krümmungsradius aufweisen können.

3. Elektrochemischer Sensor nach Anspruch 2, **dadurch gekennzeichnet, dass** die Eindrückung mit Hilfe eines Stechwerkzeuges hergestellt worden ist, dessen axiale Erstreckung es erlaubt, in der Tiefe p der Kontur eine für den Sensor repräsentative Teilenummer auszubilden.

4. Elektrochemischer Sensor nach Anspruch 1, **dadurch gekennzeichnet, dass** der Unterschied zwischen den Werten h und p erhalten wird, indem man einen Krümmungsradius der Verformung (11) verwendet, der grösser ist als der einer knopfartigen Erhebung (12).

5. Elektrochemischer Sensor nach einem der Ansprüche 1 bis 4, **dadurch gekennzeichnet, dass** die Kollektoren auf der gesamten Länge des Sensors angeordnet sind, und dass eine knopfartige Erhebung (12) auf der Höhe des isolierenden Bereiches (3) angeordnet ist.

6. Elektrochemischer Sensor nach einem der Ansprüche 1 bis 5, **dadurch gekennzeichnet, dass** mehrere knopfartige Erhebungen (12) gemeinsam eine Leiste (14) bilden.
